Europäisches Patentamt

European Patent Office

Office européen des brevets

(19)

(11) **EP 0 583 749 B1**

(12) **EUROPÄISCHE PATENTSCHRIFT**

(45) Veröffentlichungstag und Bekanntmachung des Hinweises auf die Patenterteilung:
**03.12.1997 Patentblatt 1997/49**

(51) Int Cl.[6]: **H01F 6/06**, H01F 38/02, H01L 39/24

(21) Anmeldenummer: **93112952.2**

(22) Anmeldetag: **12.08.1993**

(54) **Nichtlineare Drossel und Verfahren zur Herstellung des Drosselkerns**

Non-linear inductance and method for producing the coil core

Bobine d'inductance non-linéaire et procédé de fabrication du noyau de la bobine d'inductance

(84) Benannte Vertragsstaaten:
**DE FR IT SE**

(72) Erfinder: **Kanbach, Helmut Dr.**
**D-63500 Seligenstadt (DE)**

(30) Priorität: **14.08.1992 DE 4226942**

(56) Entgegenhaltungen:
EP-A- 0 353 449    EP-A- 0 456 182
WO-A-90/02407    DE-A- 3 825 710
US-A- 3 094 628

(43) Veröffentlichungstag der Anmeldung:
**23.02.1994 Patentblatt 1994/08**

(73) Patentinhaber: **Daimler-Benz Aktiengesellschaft**
**70546 Stuttgart (DE)**

**Beschreibung**

Die Erfindung bezieht sich auf eine nichtlineare Drossel mit einem in einem Magnetfeld angeordneten Drosselkern aus einem keramischen Hochtemperatur-Supraleiter und auf ein Verfahren zur Herstellung des Drosselkerns.

Nichtlineare, bistabile Reaktanzen mit keramischen Hochtemperatur-Supraleitern sind unter anderem als induktive Strombegrenzer für Wechselströme bekannt (EP 0 353 449 Al, DE 38 29 207 Al). Derartige bistabile Reaktanzen enthalten Induktionsspulen, die jeweils stromdurchflossen sind und einen konzentrisch zur Induktionsspule angeordneten Kern aus dem keramischen Hochtemperatur-Supraleiter aufweisen. Der Kern kann hohlzylindrisch sein und im Innern einen Weicheisenkern enthalten. Im Betrieb mit Nennstrom ist der Kern supraleitend und hält durch seine Abschirmströme die resultierende Reaktanz niedrig. Bei Überschreitung eines Grenzwerts des Stroms wird durch das entsprechend hohe Magnetfeld der Spule in einem gewissen Übergangsbereich der Kern in den normalleitenden Zustand versetzt, wodurch die resultierende Reaktanz größer wird. Der übergang vom supraleitenden in den normalleitenden Zustand folgt einem S-förmigen Verlauf der Reaktanz, aufgetragen über der magnetischen Feldstärke. Die Reaktanz ist daher bistabil und besitzt zwischen den beiden stabilen Werten einen mehr oder weniger ausgeprägten übergangsbereich bzw. eine Hysterese.

Bekannt sind auch Schaltelemente zum Verändern der Reaktanzen elektrischer Leiter mit Kernen, die bei der Arbeitstemperatur der Schaltelemente ohne Einfluß von Magnetfeldern supraleitend sind und durch das Magnetfeld einer Steuerleitung in den normalleitenden Zustand versetzt werden (DE 10 89 801).

Schaltungen mit bistabilen Reaktanzen, die mit supraleitenden Elementen arbeiten und zur Ausführung von logischen Funktionen der Booleschen Algebra eingesetzt werden, sind ebenfalls bekannt (US 3 094 628). Das Verhalten von Hochtemperatur-Supraleitern bezüglich der Flußsprünge ist bereits untersucht worden (Zeitschrift "Cryogenics" 1991, Vol. 31, November, S. 936 - 948). Hierbei wurde festgestellt, daß die Flußsprünge temperaturabhängig sind und bei Temperaturen oberhalb von ca. 30 K kaum oder nur regellos und mit kleinen Amplituden erfolgen.

Aus dem Aufsatz "Observation of Superconductivity in $Nb_2O_5$ Doped $YBa_2Cu_3O_7-\delta$. Ccmpound by Rapid Quenching" von K. V. Paulose, J. Koshy und A. D. Damodaran in der Druckschrift "Japanese Journal of Applied Physics", Vol. 30, No. 3B, März 1991, Seiten L 458 bis L 460 ist eine hochtemperatursupraleitende Keramik bekannt. Aus einem Material auf Y-Ba-Cu-O-Basis wird durch Zusatz von kleinen Mengen an $Nb_2O_5$ und anschließendem Sintern eine supraleitende Keramik hergestellt. Der Zusatz beschleunigt die Anlagerung von Sauerstoffatomen an das Y-Ba-Cu-O-Ausgangsmaterial; die Anzahl der Sauerstoffatome ist von herausragender Bedeutung für die Supraleitfähigkeit.

Nach dem Aufsatz "Superconductivity in $YBa_2Cu_3O_7-\delta-ZrO_2$ systems" von K. V. Paulose, J. Koshy und A. D. Damodaran in Supercond. Sci. Technol., 4, 1991, Seiten 98-101 eignet sich auch $ZrO_2$ als Zusatz für das Y-Ba-Cu-O-Ausgangsmaterial. Auch bei diesem Zusatz wird beim Sintern die Sauerstoffbeladung des Ausgangsmaterials beschleunigt.

Nachteilig beim Sintern für die Gewinnung von supraleitender Keramik ist die Entstehung vieler kleiner Korngrenzen (Korn-Korn-Grenzflächen, sog. "weak links") in der Keramik, was sich ungünstig auf die erzielbare Stromstärke auswirkt.

Aus dem Aufsatz "A New Process with the Promise of High $J_c$ in Oxide Superconductors" von Murakami, Morita und Doi in der Zeitschrift "Japanese Journal of Applied Physics", Vol. 28, No. 7, Juli 1989, Seiten 1189-1194 ist es bekannt, mit Hilfe eines Schmelzverfahrens supraleitendes Y-Ba-Cu-O-Material zu gewinnen.

Auch aus dem Beitrag "Magnetic flux pinning properties of oxide superconductors produced by melt processes" von H. Matsumoto, H. Kikuchi, N. Uno und Y. Tanaka in der Druckschrift "Cryogenics", Januar 1990, Vol. 30 ist es bekannt, supraleitendes Material durch einen Schmelzprozeß zu gewinnen; es wird dort eine Sprungtemperatur von 86 K genannt.

In dem Beitrag "Thermal Conductivity of High $T_c$ YBaCuO Bulk Prepared by Melt Growth Technique" von Y. Yamamoto, H. Sano, S. Ozawa und H. Tanaka aus der Druckschrift Supercond. Sci. Technol., 4, 1991, S. 355-357 ist eine Sprungtemperatur von 80 K genannt, bei welcher höhere kritische Feldstärken und damit eine höhere Stromdichte zu erwarten sind.

Vorteilhaft bei der hochtemperatursupraleitenden Keramik ist die hohe kritische Transportstromdichte bei 77 K, der Siedetemperatur des flüssigen Stickstoffs. Sie wird dadurch erzielt, daß zum einen ein Schmelzverfahren angewandt wird und daß zum andern während der Herstellung ein Anteil beigemengt wird, der die Bildung einer hochtemperatursupraleitenden Phase begünstigt.

Wenn die Keramik durch ein Schmelzverfahren entstanden ist, dann weist sie - im Vergleich zum Sinterverfahren - ein grobkörnigeres Gefüge mit geringerer Gesamtkorngrenzenfläche und damit bessere Eigenschaften für den Stromfluß auf. Vorteilhaft wirkt sich aus, daß sich aufgrund des Schmelzverfahrens feine Ausscheidungen von $Y_2Ba_1Cu_1O_5$ bilden, die eine hohe kritische Stromstärke im Magnetfeld begünstigen.

Aus der WO 90/02407 sind Drosselspulen mit Kernen aus Metalloxidkeramik (zum Beispiel Y-Ba-Cu-O) bekannt, zur Begrenzung des Kurzschlussstroms in Energieversorgungsnetzen. Das Strombegrenzerkonzept sieht vor, dass der Drosselkern im Betrieb mit Nennstrom supraleitend ist und durch seine Abschirmströme die resultierende Induktivität der Drossel niedrig hält. Im Überlastfall erzeugt die Wicklung der Drossel ein entsprechend hohes Magnetfeld im Kern, das ihn in den normalleitenden Zustand versetzt. Dadurch verschwinden die Abschirmströme verbunden mit einem Anstieg der resültierenden Induktivität, die für eine Begrenzung des Stroms sorgt, um eine im normalleitenden Fall besonders grosse Induktivität zu erzielen, kann der supraleitende Drosselkern hohl ausgebildet und zumindest teilweise mit einem ferromagnetischen Material ausgefüllt sein.

Der Erfindung liegt das Problem zugrunde, eine nichtlineare Drossel mit einem in einem Magnetfeld angeordneten Kern aus einem Hochtemperatur-Supraleiter zu entwickeln, bei dem Flußsprünge oberhalb 77 K sehr definiert und mit großer Flußänderung ablaufen und der im supraleitenden Zustand eine hohe Stromdichte aufweist.

Das Problem wird erfindungsgemäß durch die Merkmale im Patentanspruch 1 gelöst. Bei der im Patentanspruch 1 beschriebenen Drossel laufen die Flußsprünge wesentlich definierter als bei den bisher bekannten keramischen Hochtemperatur-Supraleitern ab. Der Übergangsbereich zwischen den beiden stabilen Reaktanzwerten ist relativ schmal.

Es wird vermutet, daß hierfür Phänomene wesentlich sind, die sich nicht oder nicht nur durch die in der obengenannten Zeitschrift angegebenen Annahmen für die Flußsprünge erklären lassen. Es ergeben sich als Folge der hohen kritischen Stromdichte hohe kritische Feldstärken und damit hohe Sprunggeschwindigkeiten bei gleichzeitig großen Flußänderungen. Unter abrupten Flußänderungen sind solche zu verstehen, die verzögerungsfrei ablaufen und insbesondere weniger als 1 msec benötigen.

Zum einen bringen hohe Sprunggeschwindigkeiten bei nichtlinearen Reaktanzen für viele Anwendungen große Vorteile mit sich. Zum anderen ist wichtig, daß das Verhältnis von Sprungfeldstärke $H_s$ zur Feldstärkedifferenz $H_N-H_s$ möglichst groß ist, um eine deutliche Reaktanzänderung zu bekommen ($H_s$ = Feldstärke für das Einsetzen der Flußänderung, $H_N$ = Feldstärke bei der die Vergrößerung der Reaktanz 75 % ihres Höchstwertes erreicht hat). Diese Vorteile ergeben sich sowohl bei starkstromtechnischen Anwendungen als auch bei logische Signale verarbeitenden Anwendungen. Besonders günstig ist es, daß die Flußänderungen bei der Temperatur des flüssigen Stickstoffs auftreten. Bei Temperaturen, die tiefer als 77 °K liegen, treten die Phänomene ebenfalls auf.

Bei starkstromtechnischen Anwendungen, z. B. als Strombegrenzer in Kurzschlußfällen, setzt die strombegrenzende Wirkung definiert und schnell ein, so daß unerwünscht hohe Strcmspitzen bereits während der Einschwingphase vermieden werden. Die im Anspruch 1 erwähnten Flußlinien sind z. B. in dem "Lehrbuch der Experimentalphysik" von Bergmann-Schaefer, Bd. IV, Teil 2, Verlag Walter Gruyter, Berlin, New York, 1981, S. 920, beschrieben.

Die Verluste beim Schalten sind zu vernachlässigen, da der Kern supraleitend bleibt. Das trägt wesentlich zur Energieeinsparung bei. Bisher führt die entstehende Wärme zum Verdampfen von Kühlflüssigkeit. Durch die größere Ausschaltgeschwindigkeit zwischen den beiden stabilen Reaktanzzuständen ergeben sich ebenfalls geringere Wärmeverluste. Der supraleitende Kern geht bei Überschreiten einer Schwellen-Feldstärke $H_s$ zumindest teilweise vom diamagnetischen in den paramagnetischen Zustand über.

Bei dem im Anspruch 1 beschriebenen Hochtemperatur-Supraleiter kann in vorteilhafter Weise durch die Anzahl und Größe der $Y_2Ba_1Cu_1O_5$- und $Y_2O_3$-Ausscheidungen die Höhe der für den jeweiligen Flußsprung maßgebenden magnetischen Feldstärke vorgegeben werden. Damit ist eine relativ große Freizügigkeit bei der Auswahl der Parameter elektrischer bzw. elektronischer Schaltungen möglich.

Die Grenze der magnetischen Feldstärke, bei der der jeweilige Flußsprung auftritt, läßt sich auch durch die Abkühlgeschwindigkeit des oxidkeramischen Materials während der Ausscheidung und durch die Wärmebehandlung bei der Beladung mit Sauerstoff vorgeben.

Besonders günstig ist die Ausbildung einer strombegrenzenden Drosselspule mit der im Anspruch 1 angegebenen Reaktanz, bei der bis zu vorgebbaren Flußdichten keine Beeinflussung der Supraleitfähigkeit im Kern auftritt, d. h. unterhalb der jeweiligen Flußdichtegrenzen wird die Drosselspule im Nennstrombereich betrieben. Wird die Grenze des Nennstrombereichs überschritten, dann stellt sich die höhere Reaktanz in sehr kurzer Zeit ein, wodurch im Falle eines Kurzschlußes der Strom in dieser Zeit auf diejenige Höhe begrenzt wird, die dem zweiten stabilen Wert der Reaktanz entspricht.

Eine wesentliche Steigerung der einprägbaren Stromdichte läßt sich durch Glattschleifen und Polieren der Oberfläche des supraleitenden Körpers erzielen. Diese Naßnahme führt weiter zu einer wesentlichen Verlustminderung, was für den Dauerbetrieb als nichtlinerare Drossel in Energieübertragungsanlagen von Bedeutung ist

Strombegrenzende Drosselspulen lassen sich nach dem vorstehend erwähnten Prinzip mit kleinen Abmessungen für hohe Stromstärken auslegen. Das bedeutet ebenfalls Einsparungen bei der Cryotechnik. Aufgrund ihrer geringen Abmessungen können sie auch nachträglich noch relativ einfach in vorhandene Energieversorgungsnetze insbesondere dann eingefügt werden, wenn die Kurzschlußleistungen erhöht werden, ohne daß die Einrichtungen für größere Kurzschlußströme ausgelegt werden sollen.

Bei datenverarbeitenden Schaltungen wird, wie oben erwähnt, mit den erfindungsgemäßen Reaktanzen eine Präzisierung der Umschaltschwelle zwischen den beiden binären Zuständen erreicht.

Wegen der geringen Wärmeverluste können relativ einfach aufgebaute logische Schaltungen, z. B. UND-, ODER-, NAND-, NOR-Glieder oder Flipflops für hohe Verarbeitungsgeschwindigkeiten aufgebaut werden. Die bistabilen Reaktanzen haben vorzugsweise Kerne, die als Vollzylinder, Hohlzylinder oder Tori ausgebildet sind.

Eine bistabile Reaktanz mit einem in einem Magnetfeld angeordneten keramischen Hochtemperatur-Supraleiter wird erfindungsgemäß dadurch hergestellt, daß zunächst $Y_{1+2x+y}Ba_{2+x}+Cu_{3+x}O_z$-Pulver (mit $O < x < 0{,}5$; $O < y < 0{,}5$ und $6 < z < 7$) mit 0,5 bis 10 Gew.-% Nb-, $Nb_2O_5$-, Zr- oder $ZrO_2$-Pulver zu einem pulverförmigen Ausgangsmaterial vermengt wird, daß anschließend aus diesem Ausgangsmaterial durch Kaltverpressen ein Formteil angefertigt wird, daß danach dieses Formteil ca. 5 bis 120 Minuten lang einer Temperatur zwischen 1030 und 1200 °C ausgesetzt wird, daß es anschließend mit ca. 80 bis 120 K/h auf eine Temperatur zwischen 1010 und 1020 °C und anschließend mit ca. 0,5 bis 5 K/h unter 980 °C abgekühlt wird, daß es anschließend in sauerstoffhaltiger Umgebung bis zur vollständigen Sättigung mit Sauerstoff einer Temperatur von weniger als ca. 600 bis ca. 300 °C ausgesetzt wird, daß es schließlich auf Raumtemperatur abgekühlt wird und daß danach das Formteil in eine Schaltungsanordnung mit wenigstens einem bei Stromdurchfluß ein Magnetfeld erzeugenden Leiter eingefügt wird.

Vorteilhafte Ausgestaltungen des erfindungsgemäßen Verfahrens sind in den Ansprüchen 15 bis 17 beschrieben.

Die Erfindung wird im folgenden anhand von in einer Zeichnung dargestellten Ausführungsbeispielen näher beschrieben, aus denen sich weitere Einzelheiten, Merkmale und Vorteile ergeben.

Es zeigen

Fig. 1     schematisch in einer starken Vergrößerung einen Schnitt durch einen Kristallit einer erfindungsgemäßen, durch ein Schmelzverfahren erzeugten hochtemperatursupraleitenden Keramik;

Fig. 2     den Temperaturverlauf während des Schmelzverfahrens bei der Herstellung der Keramik;

Fig. 3     ein Y-Ba-Cu-O-Phasendiagramm;

Fig. 4     einen Meßaufbau zum Testen der Wirksamkeit einer Drosselspule;

Fig. 5     Streubänder, die aus temperaturabhängigen Messungen zur Supraleitfähigkeit an verschiedenen Proben aus supraleitender Keramik entstanden sind;

Fig. 6     einen Meßaufbau für ein Meßverfahren zur Bestimmung der Transportstromdichte in einem hochtemperatursupraleitenden Material;

Fig. 7     die an einer besonders geeigneten supraleitenden Keramik erzielten Ergebnisse;

Fig. 8     die Schaltung einer Drossel mit supraleitendem Kern;

Fig. 9     die Drossel von Fig. 8 im Querschnitt;

Fig. 10     ein bistabiles Logikelement

Fig. 11     ein weiteres vorteilhaftes Logikelement und

Fig. 12     den Impedanz-Stromverlauf für ein Labormodell einer Drossel

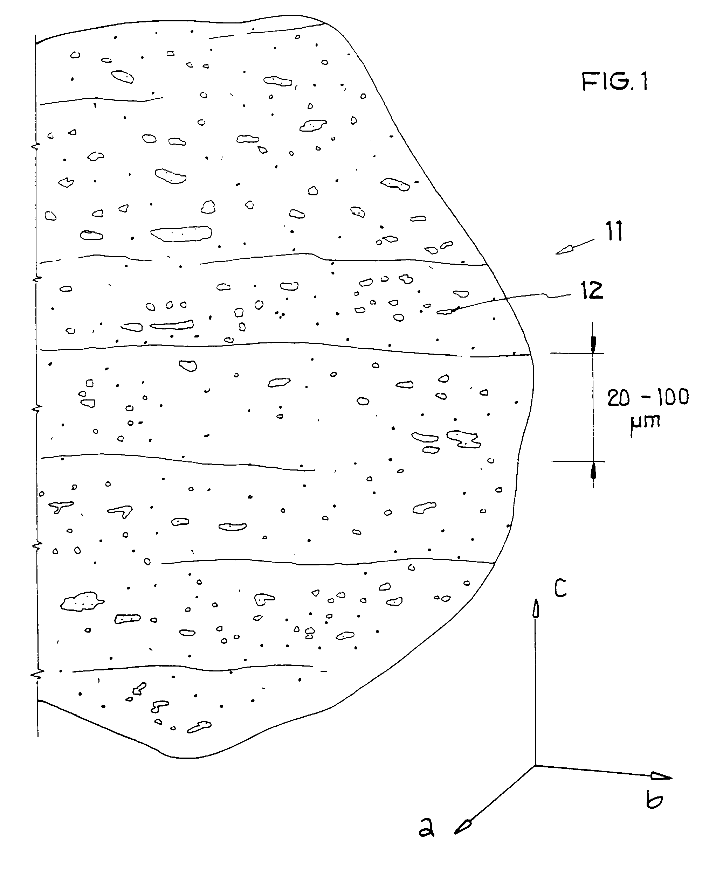

Fig. 1 zeigt vereinfachend den mikroskopisch vergrößerten Schnitt durch eine hochtemperatursupraleitende Keramik, die durch Schmelzprozessieren hergestellt ist. Aufgrund des Schmelzprozessierens ergeben sich Strukturen 11 mit großer Korngröße und mit hoher spezifischer Dichte, mit nur wenigen, sehr kleinen inneren Hohlräumen und mit eingelagerten, feinen Ausscheidungen 12 aus $Y_2Ba_1Cu_1O_5$ (211), $Y_2O_2$ sowie aus Niobaten und Zirkonaten. Diese Ausscheidungen wirken als pinning-Zentren und gewährleisten selbst bei Einwirken eines Magnetfeldes eine hohe kritische Stromdichte. Auch die hohe Dichte trägt zur Erhöhung der kritischen Stromdichte bei; durch das Schmelzprozessieren läßt sich eine Dichte von mindestens 90 % im Vergleich zu einer ideal hohlraumfreien Keramik erzielen. Eine solche Keramik ohne innere Hohlräume hat eine Dichte von ungefähr 6,36 g/cm$^3$.

Gleichzeitig begünstigt das Schmelzprozessieren die Entstehung von grobkörnigem Gefüge mit weniger Korngrenzenfläche pro Volumeneinheit, was stark zur Erhöhung der kritischen Stromdichte beiträgt. Weiterhin ist der Korn-Korn-Stromübergang deutlich verbessert.

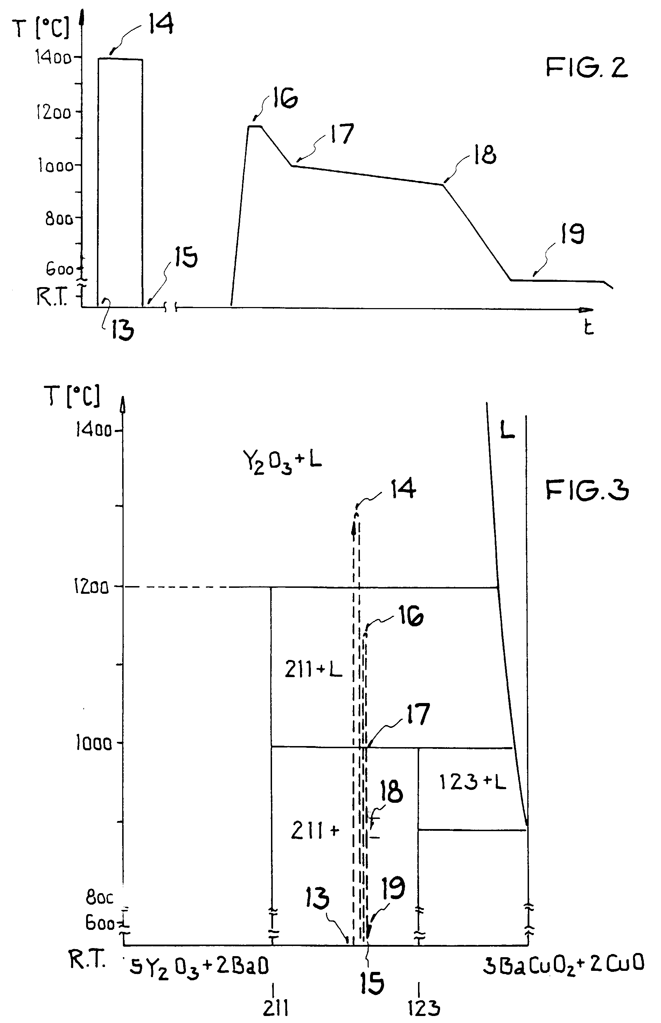

Anhand eines in Fig. 2 dargestellten Temperaturverlaufes über der Zeit läßt sich ein Herstellungsverfahren für hochtemperatursupraleitendes, keramisches Material erläutern. Die Ordinate beginnt unten bei Raumtemperatur (R.T.). Das Herstellungsverfahren läßt sich auch in einem Y-Ba-Cu-O-Phasendiagramm in Fig. 3 nachvollziehen. Gleiche Temperaturen sind in beiden Figuren mit den gleichen Bezugszeichen versehen. Als Ausgangsmaterial wird $Y_{1+2x+y}Ba_{2+x}Cu_{3+x}Oy$-Pulver (mit $6 \leq x \leq 7$) verwendet. Für x, y gilt: $O < x < 0{,}5$; $O < y < 0{,}5$, $6 < z < 7$.

In einem Platin-Tiegel wird dieses Ausgangsmaterial - ausgehend von Raumtemperatur 13 - rasch auf eine Temperatur 14 von ca. 1200 bis ca. 1400 °C gebracht und dort ca. 5 Minuten gehalten.

Nach dem Y-Ba-Cu-O-Phasendiagramm nach Fig. 3 liegen bei dieser Temperatur 14 gleichzeitig $Y_2O_3$-Teilchen und Schmelze (L) vor. Nach raschem Abkühlen auf Raumtemperatur 15 entsteht ein Stoff, welcher zum Zwecke einer Homogenisierung und Verfeinerung der $Y_2O_3$-Teilchen zu einem Pulver gemahlen wird.

Das Abkühlen kann beispielsweise durch Ausgießen der mit den $Y_2O_3$-Teilchen durchsetzten Schmelze in flüßigen Stickstoff vorgenommen werden; stattdessen kann auch die Splat-Cooling-Technik angewendet werden, bei der die Schmelze zwischen zwei kühlen Metallplatten flachgepreßt wird.

Dem Pulver wird - fein verteilt - mit ca. 0,5 bis 10 Gew.-% Nb-, $Nb_2O_5$-, Zr- oder $ZrO_2$-Pulver als Zusatz beigemengt. Die Zusätze können auch vor dem ersten Aufschmelzen dem Ausgangsmaterial zugegeben werden. Das Pulver wird zu einem gewünschten Massivteil (Formteil) verpreßt. Anschließend wird gemäß Fig. 2 das Herstellungsverfahren durch zügige Erwärmung von Raumtemperatur auf eine Temperatur 16 von etwa 1050 bis 1200 °C fortgesetzt. Die Formung des Massivteils bleibt bei dieser Erwärmung erhalten. Diese Erwärmung führt nämlich nur zum partiellen Aufschmelzen im Zweiphasenbereich (211+L) (s. Fig. 3); die feinverteilten $Y_2O_3$-Teilchen wirken dabei auch als Keime für die Bildung von 211-Teilchen, das sind Teilchen der Form $Y_2Ba_1Cu_1O_5$.

In Fig. 3 sind auf der Abszisse stöchiometrische Zusammensetzungen von Y-Ba-Cu-Verbindungen anhand von Indizes angegeben, und zwar bedeutet 211 eine Phase der Form $Y_2Ba_1Cu_1O_5$ und 123 eine Phase der Form $Y_1Ba_2Cu_3O_7$. Die Ordinate beginnt bei Raumtemperatur (R.T.). Bei der Verwendung eines Ausgangsmaterials des Typs $Y_{1+2x+y}Ba_{z+x}Cu_{3+x}O_z$ für die Herstellung einer hochtemperatursupraleitenden Keramik ist auf der Abszisse ein Punkt zwischen 123 und 211 interessant.

Das Formteil wird der o. a. Temperatur ca. 12 bis 60 min ausgesetzt. Nach Abkühlung (mit ca. 100 K/h) auf eine Temperatur 17 von etwa 1010 bis 1020 °C (peritektische Temperatur gemäß Fig. 3) werden die Massivteile langsam (1 bis 10 K/h) auf eine Temperatur 18 zwischen 950 und 880 °C abgekühlt.

Anschließend wird das Massivteil in Luft bzw. Sauerstoff bis zur vollständigen Sättigung mit Sauerstoff einer Temperatur 19 zwischen ca. 600 bis 200 °C ausgesetzt. Die Sättigung mit Sauerstoff ist dann erreicht, wenn in der Keramikmatrix nahezu alle $Y_1Ba_2Cu_3O_z$-Kristalle ($6 < z < 7$) sich zu einer Phase des Typs $Y_1Ba_2Cu_3O_7$ umgewandelt haben. Die dabei ablaufende Reaktion (211 + L --> 123, s. Fig. 3) wird durch die Keimwirkung der Niobate bzw. Zirkonate stark beschleunigt.

Die Dauer bis zur Sättigung hängt von der Größe und der Formung des Massivteils ab, bei Linearabmessungen von einigen Zentimetern reicht eine Zeit von ca. 5 bis 20 Stunden bis zur Sättigung aus. Das ist eine für eine wirtschaftliche Herstellung vertretbare Zeit.

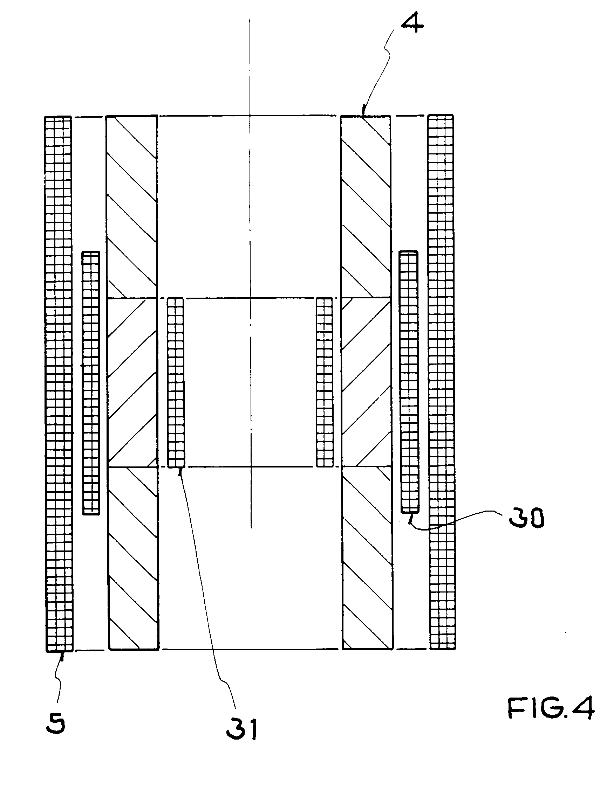

Zur Beschreibung von Supraleitereigenschaften einer Probe kann ein Meßverfahren, das die induktive Abschirmung der Probe in Abhängigkeit von der Temperatur erfaßt, herangezogen werden. Bei einem solchen Meßverfahren (s. Fig. 4) wird die hohlzylindrische Probe zwischen zwei konzentrisch angeordneten Spulen 30 und 31 positioniert. Die eine Spule dient als Sendespule und ist von einem Wechselstrom durchflossen, die andere hat die Funktion einer Empfangsspule, in der durch das von der Sendespule erzeugte Magnetfeld eine Induktionsspannung entsteht. An die Empfangsspule ist ein Gleichrichter mit einem ausgangsseitigen Widerstand angeschlossen. An dem Widerstand ist eine durch Gleichrichtung der Induktionsspannung entstehende Spannung abgreifbar. Wenn diese Spannung auf eine andere (Bezugs-)-Spannung, beispielsweise die an der Sendespule anliegende Spannung bezogen wird, entsteht eine dimensionslose Größe.

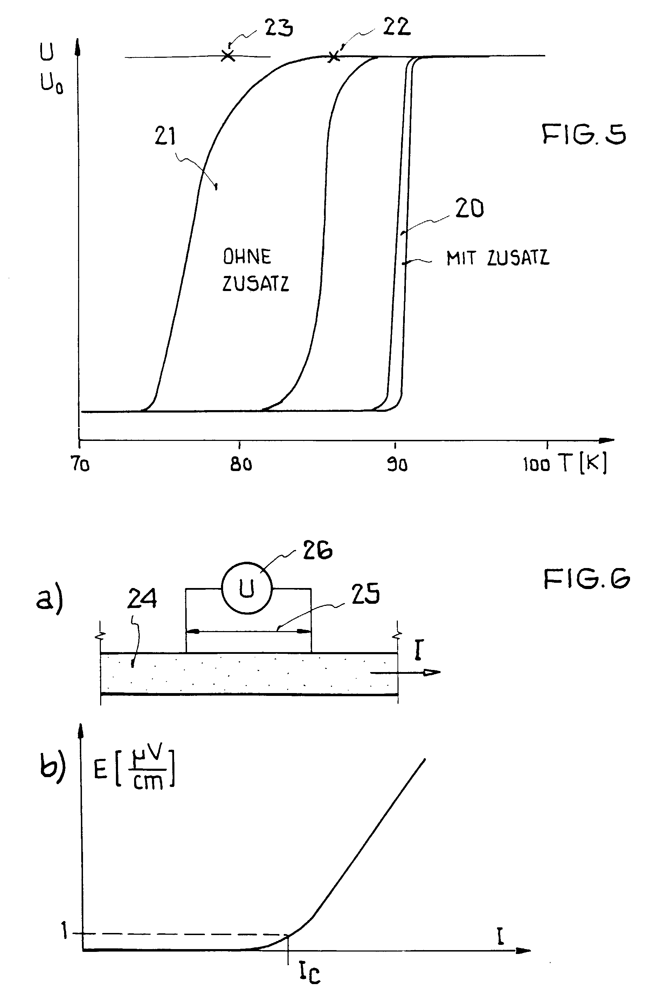

Fig. 5 zeigt die Bereiche, in denen Meßkurven für verschiedene Proben liegen, die durch Messung dieser dimensionslosen Größe in Abhängigkeit von der Temperatur entstanden sind. Je kleiner diese Größe ist, desto mehr wird ein von der Senderspule kommender magnetischer Fluß von der Probe abgeschirmt. Das Ausmaß der Abschirmung des Magnetfeldes läßt auf das Ausmaß des Vorliegens nicht bzw. schwach supraleitender Bereiche in der Probe schließen, denn bei Supraleitung ohne äußeres Magnetfeld ist die Probe diamagnetisch.

Meßkurven für eine Vielzahl von Proben aus supraleitender Keramik, die jedoch alle mit derselben Temperaturführung hergestellt wurden, ergeben die dargestellten Streubereiche 20 und 21.
Bei denjenigen Proben, bei denen während der Herstellung - wie weiter oben beschrieben - $Y_2Ba_1Cu_2O_5$, $Y_2O_3$, Nb-, $Nb_2O_5$-, Zr, $ZrO_2$-Pulver zugesetzt wurde, ergeben sich in einem engen Streubereich 20 liegende Meßkurven.

Für die anderen, ohne Zusatz hergestellten Proben liegen die Meßkurven recht weit auseinander; es ergibt sich ein breiterer Streubereich 21.
Die Temperatur, bei der von höheren Temperaturen kommend ein beobachtbarer Abfall der Induktionsspannung an der Empfangsspule eintritt (gleichbedeutend mit dem Abfall der Meßkurve ab Punkt 22 in Fig. 5), ist der Wert der Sprungtemperatur der Probe. Bei dieser Temperatur gibt es durchgehende supraleitende Bereiche in der Probe.

Es ist deutlich zu sehen, daß sich mit Hilfe der Zusätze eine Sprungtemperatur von ca. 92 K erzielen läßt. Bei Proben, bei denen während der Herstellung keine Zusätze beigemengt wurden, erreicht die Sprungtemperatur nur einen niedrigeren Wert.

Dieser Sachverhalt wird bestätigt durch Ergebnisse aus dem Aufsatz "Magnetic flux pinning properties of oxide superconductors produced by melt processes" in der Druckschrift "Cryogenics", Vol. 30, Januar 1990 von K. Mastumoto, H. Kikuchi, N. Uno und Y. Tanaka. Aus dieser Schrift ist bei Anwendung eines Schmelzverfahrens eine Sprungtemperatur 22 von 86 K bekannt.

Aus dem Aufsatz "Thermal Conductivity of High $T_c$ YBaCuO Bulk Prepared by Melt Growth Technique" von H. Yamamoto, M. Sano, S. Ozawa und M. Tanaka ist bei Anwendung eines Schmelzverfahrens eine Sprungtemperatur (Punkt 23 in Fig. 5) von 80 K bekannt. Nach den genannten Schriften sind die Sprungtemperaturen an kleinen Proben mit bis zu 2 cm Durchmesser und bis zu 1 cm Dicke ermittelt worden.

Dagegen können mit dem weiter oben beschriebenen Herstellungsverfahren auch große Proben mit Linearabmessungen von mehreren Zentimetern mit einer höchstmöglichen Sprungtemperatur von 92 K mit einem Schmelzverfahren hergestellt werden. Ein wichtiges Merkmal ist auch die Steilheit des supraleitenden Übergangs.

Material, dem bei der Herstellung $Y_2Ba_1Cu_1O_5$-, $Y_2O_3$-Nb-, $Nb_2O_5$-, Zr- oder $ZrO_2$-Pulver zugesetzt worden ist, hat einen wesentlich steileren Übergang in den supraleitenden Zustand als das Material ohne Zusatz.

Die vorteilhafte Wirkung von Zusätzen auf Nb- und Zr-Basis kann zusammenfassend wie folgt charakterisiert werden:

Erstens: Die peritektische Rückreaktion (211+L)--> (123) wird aufgrund der Keimbildung von Niobaten bzw. Zirkonaten stark beschleunigt.

Zweitens: Die Niobate bzw. Zirkonate wirken zusätzlich zu 211 als Pinningzentren für den magnetischen Fluß.

Drittens: Die Sauerstoffaufnahme wird erleichtert.

Eine vorteilhafte Weiterentwicklung ist eine vor dem Beginn des Schmelzverfahrens vorgenommene, gleichzeitige Beimengung von Nb-, $Nb_2O_5$-, Zr- oder $ZrO_2$- und evtl. auch Ag- oder $Ag_2O$-Pulver zum Ausgangsmaterial (Ag- bzw. $Ag_2O$-Zusatz im Bereich 5 bis 40 Gew.-%, vorzugsweise 10 bis 20 Gew.-%). Die Ag- bzw. $Ag_2O$-Teilchen bzw. Tröpfchen reagieren nicht mit der Schmelze, sie bleiben als solche feinverteilt. Da die Ag- bzw. $Ag_2O$-Teilchen die Keramik das Auftreten von Rissen verhindern, ist damit ein besonders dichtes und bruchunempfindliches Material herstellbar.

Durch Schleifen und Polieren wird die Oberfläche des fertigen supraleitenden Körpers geglättet. Es wurden nach dem Glattschleifen bereits Erhöhungen der kritischen Stromdichte um 50 - 100 % gemessen.

Anhand von Fig. 6 läßt sich die Messung der kritischen Transportstromstärke Ic einer Probe 24 aus supraleitendem Material erläutern. Nach Fig. 6a wird durch die Probe 24 ein (einstellbarer) Gleichstrom I ("Transportstrom") geleitet. Außen an der Probe 24 sind in einem festen Abstand 25 zueinander zwei elektrische Anschlüsse (Spannungsabgriffe) angebracht, die zu einem Spannungsmesser 26 geführt sind. Jede dort angezeigte Spannung wird durch den Abstand 25 dividiert, so daß sich ein Wert für eine Feldstärke E ergibt. Der Gleichstrom I wird bei konstanter Temperatur nun so lange gesteigert, bis diese Feldstärke den Wert $1 \cdot 10^{-6}$ V/cm erreicht. Gemäß Fig. 6b, die den Verlauf der Feldstärke in Abhängigkeit von dem Gleichstrom (Transportstrom) zeigt, ist der bei einer Feldstärke von $1 \cdot 10^{-6}$ V/cm durch die Probe fließende Strom der sog. kritische Transportstrom.

Die kritische Transportstromdichte ergibt sich durch Division des kritischen Transportstroms Ic durch die geometrische Querschnittsfläche der Probe. Er erreicht Werte von $I_c > 10^4$ A/cm.

Eine mit dem obengenannten Verfahren hergestellte Keramik ist verwendbar für Kerne in hochstromtragfänigen Spulen. Solche Spulen werden für Starkstromzwecke eingesetzt, z. B. für strombegrenzende Drosselspulen in Anlagen der Energieerzeugung und Energieverteilung.

Eine solche Keramik ist auch verwendbar als magnetfeldabsorbierendes Bauteil und als passives Magnetlager.

Das Wesen einer erfindungsgemäßen Drosselspule besteht darin, daß der supraleitfähige Teil des Kerns aus einem metalloxidkeramischen Supraleiter besteht, daß der Kern eine Wicklung aufweist, in welcher Wechselstrom mit Netzfrequenz fließt und daß der Übergang in den paramagnetischen Zustand von einem Schwellenstrom in der Wicklung erzeugt wird.

Mit dieser Vorrichtung läßt sich eine wesentliche Reduzierung des kältetechnischen Aufwands und der Materialkosten erreichen.

Die strombegrenzende Drossel wird insgesamt, zumindest aber der Kern mit Flüssig-Stickstoff, gekühlt. Eine Kühlung mit Flüssig-Stickstoff reicht aus, um den Kern auf der für die Supraleitung notwendigen Temperatur zu halten.

Besonders günstig ist es, einen supraleitenden Hohlkörper aus supraleitfähigen und ferromagnetischen Elementen zusammenzusetzen. Die Verwendung von ferromagnetischem Material in Verbindung mit dem supraleitenden Kern erhöht den magnetischen Fluß wesentlich, so daß die strombegrenzende Wirkung der Drossel im Kurzschlußfall verbessert wird. Andererseits können die Abmessungen der Drosselspule bei einer für einen bestimmten Einsatzfall festgelegten Induktivität entsprechend reduziert werden.

Bei einer zweckmäßigen Ausführungsform ist das ferromagnetische Material gegen den supraleitenen Kern bzw. die supraleitenden Elemente thermisch isoliert und wird auf einer Temperatur gehalten, bei der die Suszeptibilität einen für ferromagnetische Stoffe typischen hohen Wert hat.

**Beispiel:**

Die Erfindung wird an einem einphasigen Labormodell demonstriert. Die Anordnung besteht im wesentlichen aus einem Schnittbandkern (Höhe 175 cm, Eisenquerschnitt 10,5 $cm^2$), einer Erregerwicklung von 721 Windungen und einem Kurzschlußring aus schmelprozessiertem YBaCuO (Innerer Durchmesser: 55 mm, Querschnitt: ca. 0,2 $cm^2$). Unter den Versuchsbedingungen waren je nach YBaCuO-Ring Impedanzänderungen um den Faktor 10-20 erzielbar.

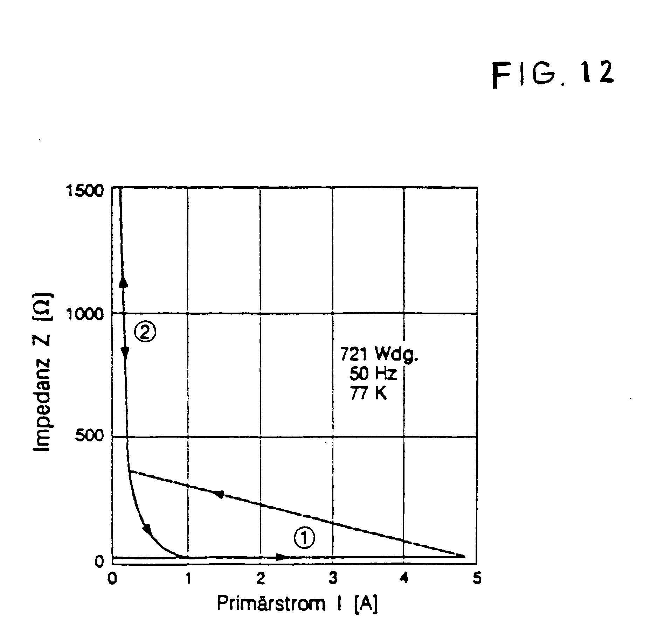

Genaueren Aufschluß über die Stromabhängigkeit der Impedanz des Begrenzermodells gibt Fig. 12 (Messung bei stationären Strömen, 50 Hz, 77 K). Die Impedanz bleibt bis zu einem Schwellwert des Erregerstromes ($I_{primär} = 4,8$ A, $I_{sek.} = 3,5$ kA) bei einem vergleichsweise kleinen Wert nahezu konstant (Kurvenabschnitt 1). Oberhalb des Schwellwertes quencht der Kurzschlußring, und der Primärstrom geht sprungartig zurück. im dargestellten Fall etwa um den Faktor 19. Der Arbeitspunkt liegt jetzt auf dem Kurvenabschnitt 2 mit negativer Steigung, der für den restistiven Zustand des Kurzschlußrings charakteristisch ist. Eine Erhöhung der treibenden Spannung bewirkt eine weitere Stromreduzierung bei gleichzeitig immer stärkerem Anstieg der Impedanz. Bei Schaltversuchen mit der Anordnung wird der Überstrom in wenigen Millisekunden begrenzt.

Die Strombegrenzung wird im wesentlichen durch den transformierten Ersatzwiderstand des Kurzschlußrings bewirkt (Der schmelzprozessierte YBaCuO-Ring hat einen relativ geringen spezifischen Widerstand von 0,5 - 1 m$\Omega$cm im normalleitenden Zustand). Der YBCO-Kurzschlußring ist in doppelter Funktion wirksam: Als Supraleiter gewährleistet er eine geringe Impedanz im Normalbetrieb, als resistiver Leiter eine hohe Impedanz zur Strombegrenzung im Kurzschlußfall.

Bei einer weiteren vorteilhaften Ausführungsform ist ein ferromagnetisches Körper mit einer Schicht bzw. einem dünnwandigen Hohlzylinder aus einem metalloxidkeramischen Supraleiter versehen. Eine derartige Ausbildung des Kerns ist sehr einfach.

Der ferromagnetische Körper muß bei tiefen Temperaturen seine Suszeptibilität behalten. Wird ein ferromagnetisches Material verwendet, das bei tiefen Temperaturen keine hohe Suszeptibilität hat, dann wird vorzugsweise auf einem ferromagnetischen Körper eine thermisch isolierende Schicht vorgesehen, auf der eine Schicht aus einem metalloxidkeramischen Supraleiter angeordnet ist.

Bei einer besonders günstigen Ausführungsform bestehen der surpaleitende Kern bzw. die supraleitenden Elemente aus einzelnen, aneinandergereihten Segmenten aus metalloxidkeramischem supraleitendem Material. Mit einer so gestalteten Anordnung läßt sich ein großer Kernaufbau erreichen.

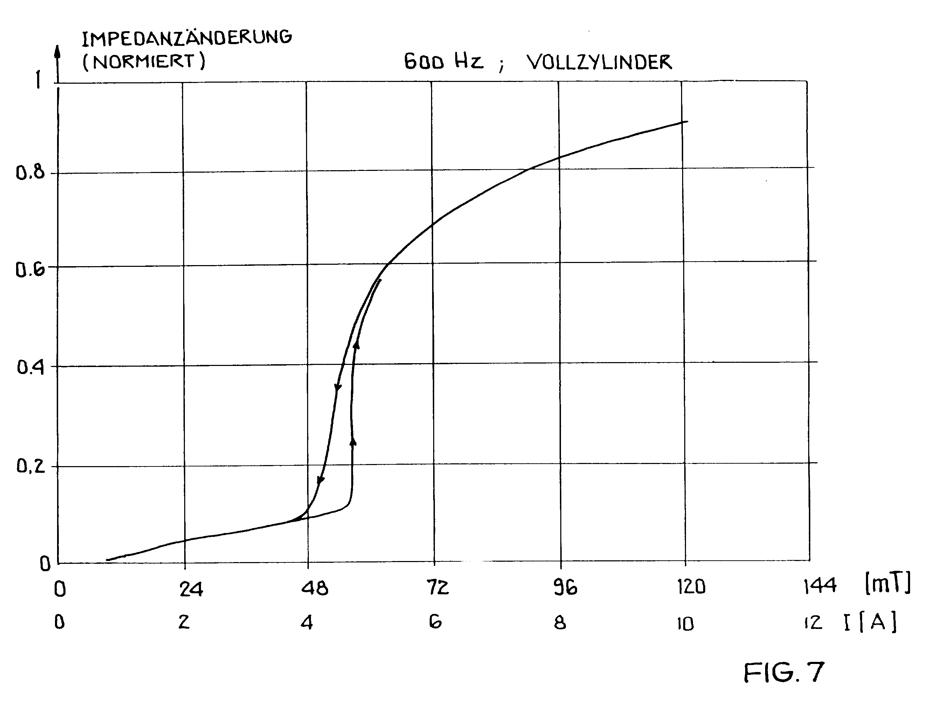

Die grafische Darstellung von Fig. 7 dient zur Illustration der Vorgänge bei der Flußänderung im Hochtemperatur-Supraleiter während des Anwachsens und der Verminderung der durch die außen angebrachte Spule (in Fig. 4 entspricht dies der Spule 5). Die Kurve zeigt ein Hystereseverhalten. Bei der Messung wurde ein erfindungsgemäß hergestellter Kern aus hochtemperatursupraleitender Keramik von 17 mm Durchmesser und 30 mm Länge in einer Zylinderspule 5 mit Wechselstrom von 50 - 1000 Hz untersucht. Ein typischer Verlauf der Impedanz als Funktion des Effektivwertes des Stromes ist in Fig. 7 für die Frequenz von 600 Hz aufgetragen.

Ein Spulenstrom von 8 A entspricht dabei einer Induktion von ungefähr 0,1 T. Der steile Anstieg etwas oberhalb von 4 A bei der schmelztexturierten Probe ist keineswegs selbstverständlich. Es zeigt sich nämlich, daß bei gesinterten Proben schon bei Strömen weit unterhalb von 1 A ein stetiger Anstieg einsetzt, so daß die unbehandelten Proben für nichtlineare Reaktanzen nicht verwendbar sind, da hierfür ein definierter Schwellenstrom bzw. eine Schwelleninduktion notwendig ist.

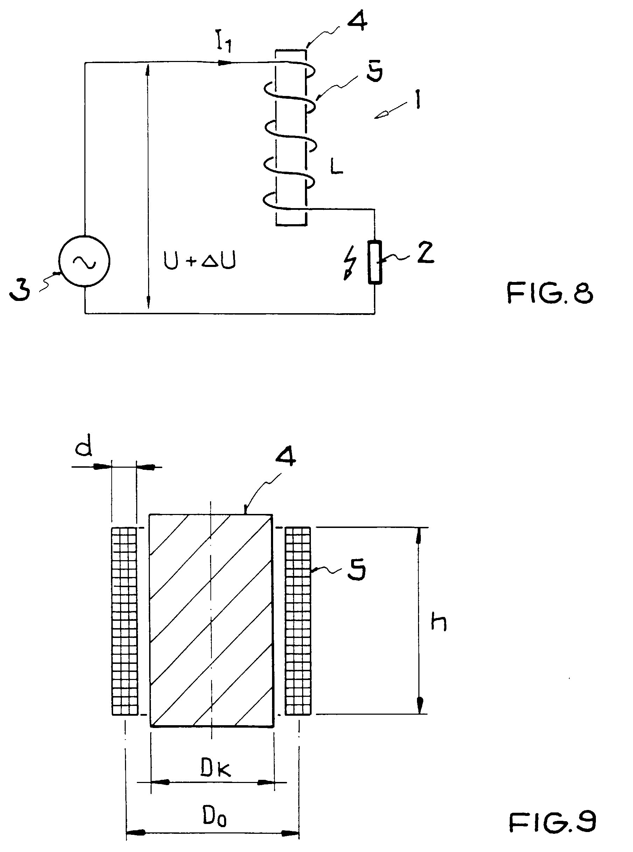

In Fig. 8 bezeichnet 3 eine Wechselstromquelle (Generator, Transformator), 2 einen Verbraucher, 1 eine strombegrenzende Drosselspule mit einem supraleitenden Kern 4 und einer Induktivität L. Der Kern 4 ist durch Abkühlung unter die Übergangstemperatur des Kernmaterials supraleitend und bewirkt, daß infolge der Abschirmströme im Kern die Induktivität der Drossel 3 auf dem niedrigen Wert $L = L_1$ gehalten wird. An der Drossel 1 tritt der Spannungsabfall $U = I_1 \omega L_1$ auf; wenn $I_1$ den betriebsmäßig fließenden Strom, $\omega$ die Netzkreisfrequenz bezeichnet. Dabei habe die Spannung am Verbraucher 2 den Wert U und die Spannung der Stromquelle 3 den Wert $U + \Delta U$. Ein Kurzschluß, - in Fig. 8 mit Pfeilsymbol eingetragen -, bedeutet, daß die Impedanz des Verbrauchers und seine Betriebsspannung U gegen Null gehen. Ohne besondere Maßnahme würde dann der Kurzschlußstrom $I_1 = (U + U)/(\omega L_1)$ fließen. Dies wird erfindungsgemäß dadurch verhindert, daß in der Drosselspule 1 bei einem unerwünschten Stromanstieg die magnetische Suszeptibilität im Kern durch überschreiten der kritischen Stromdichte und magnetischen Flußdichte angehoben wird. Da die Abschirmströme verschwinden, dringt der magnetische Fluß in den Innenraum der Drosselwicklung ein und führt zu einer Erhöhung der Induktivität auf den Wert $L_2 > L_1$ führt. Statt des Kurzschlußstroms fließt jetzt der Strom $I_2 = (U + U)/(\omega L_2)$. Bei dieser Betrachtung sind die Impedanzen der Stromquelle und Leitungen vernachlässigt.

Zur Erläuterung wird ein Zahlenbeispiel mit den Daten $U = 63,6$ kV, $I_1 = 2$ kA, $\omega = 314$ s$^{-1}$, $L_1 = 3$ mH, $\Delta U = 1,9$ kV betrachtet. Mit diesen Zahlenwerten ergibt sich der Kurzschlußstrom $I_K = 69,5$ kA $\approx 35\ I_1$.

Wird der Strom im Störungsfall zum Beispiel auf $I_K/5 \approx 14$ kA begrenzt, so sinken die Kräfte in den stromführenden Betriebsmitteln auf 1/25 der Kräfte infolge der elektrodynamischen Beanspruchung durch den vollen Kurzschlußstrom.

Um die Bedingung $I_2 = I_K/5$ zu erfüllen, müßte die strombegrenzende Induktivität im Störungsfall den Wert

$$L_2 = (U + U)/(\omega\ I_2)$$

annehmen, d. h. auf $5\ L_1$ ansteigen. Induktivitätsänderungen dieser Art sind mit einer zylindrischen Drosselspule nach Fig. 9 zu erzielen. In Fig. 9 bezeichnet 4 den supraleitfähigen Kern aus Metalloxid-Keramik, insbesondere Y-Ba-Cu-O mit dem Durchmesser $D_K$, 5 die Wicklung mit dem mittleren Wicklungsdurchmesser $D_0$, der Drahtdicke d, der Höhe h und der Windungszahl w.

Für die Induktivität der Zylinderwicklung allein gilt bei $d \ll D_0 : L_0 = D_0 \times Q\ w^2/2$ mit dem Geometriefaktor Q, der als Funktion von $D_0/h$ in Kohlrausch, Praktische Physik, Band 2 (1944), 204, tabelliert ist. Für die Zylinderwicklung mit Kern gilt folgende Überlegung: Wenn die Temperatur des Kernmaterials dessen Übergangstemperatur Tc unterschreitet, wird der Kern supraleitend und drängt den magnetischen Fluß in den Ringraum zwischen Kern und Wicklung. Zur näherungsweisen Berechnung der resultierenden Induktivität in diesem Zustand kann der Kern durch eine konzentrische zweite Zylinderwicklung gleicher Höhe, mit dem Durchmesser $D_K$ und mit gegenläufigem Wicklungssinn ersetzt werden. Die Induktivität dieser Ersatzschaltung beträgt:

$$L_1 = (D_0 \times Q \times (D_0/h) - D_K \times Q \times (D_K \ 7h)) \ w^2/2.$$

Dringt der Fluß durch Überschreiten der kritischen Stromdichte und magnetischen Flußdichte in den Kern ein, so steigt die Induktivität auf den Wert $L_0 = L_2$ und begrenzt den Strom auf den Betrag $(U + U)/ L_2$). Das vorstehende Konzept der Strombegrenzung ist prinzipiell auf Wicklungen und Kerne mit anderer Geometrie übertragbar, so auch auf toroidale Anordnungen, die ohne störende magnetische Streufelder arbeiten.

Eine weitere Version des Kerns ist die zylindrische Drosselspule: Der Kern ist als Hohlzylinder mit der Wanddikke $d_h$ ausgebildet und konzentrisch zur Wicklung angeordnet.

Endstücke verschließen den Hohlzylinder an den Stirnseiten. Sie bewirken, daß im supraleitenden Zustand der magnetische Fluß der Wicklung nicht in den Innenraum des Zylinders eindringt und somit eine vergleichbare Abschirmung wie bei einem massiven zylindrischen Kern entsteht.

Der supraleitende Kern kann als geschlossener Hohlzylinder ausgebildet sein, in welchem sich ferranagnetisches Material befindet.

Das ferromagnetische Material muß bei tiefen Temperaturen seine Suszeptibilität behalten. Es wird ein ferromagnetisches Material eingesetzt, das bei höheren Temperaturen, z. B. Raumtemperatur, eine hohe Suszeptibilität hat, die im Bereich von 90 K annähernd erhalten bleibt.

Der supraleitende Kern kann auch als Schicht auf einem ferromagnetischen, z. B. zylindrischen oder torusförmigen, Körper aufgebracht werden. Wenn der Körper seine hohe Suszeptibilität auch bei tiefen Temperaturen behält, können Kern und Körper miteinander verbunden sein. Eine solche Anordnung hat den Vorteil, daß der Kern und der Körper gemeinsam gekühlt werden können. Vielfach vereinfacht sich hierdurch der konstruktive Aufwand für die Kühlung. Dies trifft für Vorrichtungen zu, bei denen das ferromagnetische Material seine Suszeptibilität im Bereich der Übergangstemperatur des Kerns beibehält. Fällt die Suszeptibilität im Bereich der Übergangstemperatur auf unerwünscht tiefe Werte ab, dann ist zwischen dem ferromagnetischen Körper und dem Kern eine thermisch isolierende Schicht vorzusehen, auf die insbesondere der Kern als Schicht aufgebracht werden kann.

Die oben beschriebene Drosselspule kann bei Netzfrequenz eine kleine Impedanz gegenüber der Verbraucherimpedanz aufweisen.

Die Drosselimpedanz $L_1$ bei Nennstrom $I_1$ steht beispielsweise im folgenden Verhältnis zur Verbraucherimpedanz Z:

$$L_1 = p \cdot Z, \qquad (1)$$

wobei $p = 0,01$ sein kann. Im Kurzschlußfall verbleibt die Restimpedanz:

$$Z_K = q \cdot Z. \qquad (2)$$

Bei den nachstehenden Überlegungen zur Strombegrenzung wird der Einfachheit halber auf die Rechnung mit komplexen Widerständen verzichtet, da p sowie q $<< 1$ ist.

Unter den genannten Voraussetzungen gilt für den Nennstrom bei supraleitendem Drosselkern

$$I_1 = U/(Z + L_1) = U/(1 + p)Z).$$

Steigt der Strom I an, so geht in dem keramischen Kern die diamagnetische Eigenschaft des Kerns ab einer bestimmten Schwelle verloren. Beobachtet wird bei zunehmendem Magnetfeld ein nahezu stetiger Zuwachs von paramagnetischen Bereichen im Volumen eines oxidischen Hoch-Übergangstemperatur-Supraleiters. Infolgedessen ist die Induktivität eine Funktion des Stroms I.

Sie wird für die weiteren Betrachtungen näherungsweise in der Form

$$L/L_1 = a(I/I_1 - 1) + 1$$

angesetzt, wobei der mit a bezeichnete Koeffizient aus Messungen zu bestimmen ist. Mit der Abkürzung $x = I/I_1$ läßt sich hieraus die folgende Beziehung herleiten:

$$I(p(a(x - 1) + 1) + q) = U/Z = I_1 \ (1 + P),$$

wobei mit U die Netzspannung bezeichnet ist.

Sie führt auf die Gleichung

$$x^2 + ((p - pa + q)/(pa))x - (1 + p)/(pa) = 0 \qquad (3)$$

aus der sich das Verhältnis Kurzschlußstrom/Nennstrom berechnen läßt, wenn a, p, und q bekannt sind.

Die schnelle Reaktanzänderung begrenzt den Kurzschlußstrom bereits im Anstieg. Dies bedeutet, daß der Leistungsschalter, mit dem der Kurzschlußstrom abgeschaltet wird, einen geringeren Strom abschalten muß.

Die hierzu benötigte Zeit beträgt üblicherweise 1 bis 2 Perioden der Netzfrequenz. Die Drosselspule gem. Fig. 9 kann zweckmäßigerweise einen Hohlraum mit ferromagnetischem Material aufweisen. Sie arbeitet jedoch auch ohne ferromagnetisches Material, z. B. als Vollkern. Sie kann für hohe Nennströme ausgelegt werden.

Die Drossel kann insgesamt gekühlt werden. Dadurch ist einerseits zwischen Kern und Wicklung eine sehr enge magnetische Kopplung ohne kryotechnische Trennung möglich, die bei alleiniger Kühlung des Kerns notwendig Wäre. Andererseits sind die ohmschen Verluste in der Wicklung niedrig, da der spezifische Widerstand des Leitermaterials der Wicklung bei Flüssigstickstoff-Temperatur auf rund 1/10 des Werts bei Raumtemperatur absinkt.

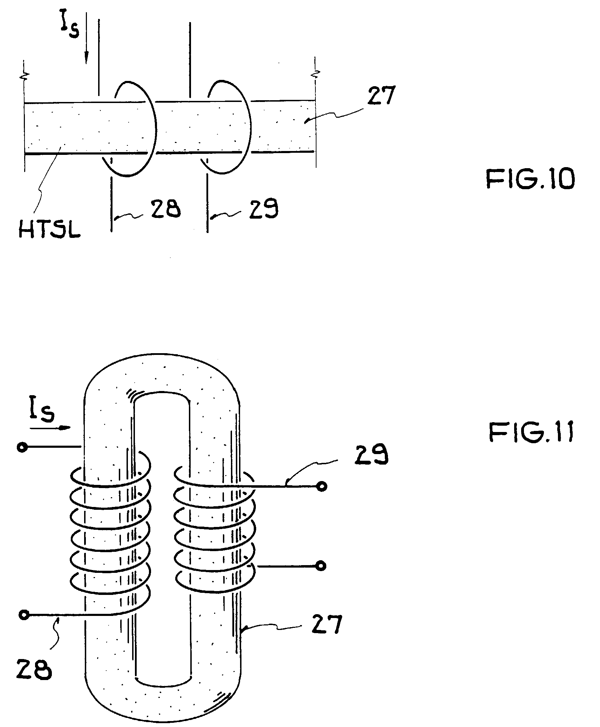

Das in Fig. 10 dargestellte Schaltelement benutzt die unterschiedliche magnetische Permeabilität des Hochtemperatur-Supraleiters 27, welcher als gemeinsamer Kern zweier Spulen 28 und 29 angeordnet ist. Sobald die Steuerspule 28 vom Steuerstrom $I_S$ durchflossen wird, ändert sich der Fluß im Supraleiter ab einer bestimmten Schwelle ($I_s$) und im Sekundärkreis (Spule 29) wird ein Stromstoß induziert.

Bei jeder impulsartigen Überschreitung des Schwellstromes Is, bei welchem der Kern 27 vorher diamagnetisch war, findet eine große Änderung des Flusses statt. War andererseits der Kern vorher schon diamagnetisch, so ändert sich der Fluß nicht. In diesem Falle gibt es auch kein Ausgangssignal, und diese Eigenschaft, zwei Zustände zu besitzen, kann man nun in der üblichen Weise zur Herstellung logischer Schaltungen verwenden. Fig. 11 zeigt lediglich eine Abwandlung des Prinzips, in dem der Hochtemperatur-Supraleiter zu einem Ring geschlossen ist. Dieser Ring kann zusätzlich in seinem Inneren noch mit ferromagnetischem Material ausgefüllt sein, um die Änderung der magnetischen Suszeptibilität zu vergrößern.

## Patentansprüche

1. Nichtlineare Drossel mit einem Drosselkern aus einem Hochtemperatur-Supraleiter, welcher in einem Magnetfeld angeordnet ist, das im Drosselkern Flußlinien hervorruft, wobei im Supraleiter, welcher aus einer Metalloxidkeramik besteht, bei der Temperatur des flüssigen Stickstoffs die magnetischen Flußlinien unterhalb eines Schwellwertes der magnetischen Feldstärke in das Innere des Supraleiters gedrängt werden, wobei der Supraleiter normalleitend wird,
**dadurch gekennzeichnet**,
daß die kritische Stromdichte $i_c > 10^4$ A/cm$^2$ ist, daß der Hochtemperatur-Supraleiter aus einer mehrphasigen $Y_{1+2 \cdot x+y} Ba_{2+x} Cu_{3+x} O_z$ - Keramik besteht, wobei $O < x < 0,5$; $0 < y < 0,5$ und $6 < z < 7$ ist, und daß in der Keramik durch eine Schmelztexturierung erzeugte $Y_2Ba_1Cu_1O_5$ - und/oder $Y_2 O_3$ -Ausscheidungspartikel vorhanden sind, welche einen mittleren Durchmesser von weniger als 5 μm

aufweisen, und daß die magnetischen Flußlinien, welche an feinverteilten Haftstellen in Form von Ausscheidungen in einem schmelztexturierten YBaCuO-Supraleiter verankert sind, ab dem Schwellwert Hs für die magnetische Feldstärke innerhalb eines relativ zur Feldstärke Hs kleinen Intervalls unter abrupter und signifikanter Änderung des Flusses und damit auch der Reaktanz ins Innere des Supraleiters gedrängt werden, wobei der Supraleiter lokal normalleitend wird.

2. Nichtlineare Drossel nach Anspruch 1,
**dadurch gekennzeichnet**,
daß durch die Zahl der Ausscheidungen soweit erhöht wird, daß die kritische Stromdichte mindestens um den Faktor zwei höher ist als ohne Ausscheidungen.

3. Nichtlineare Drossel nach einem der Ansprüche 1 bis 2,
**dadurch gekennzeichnet,**
daß die Ausscheidungen einen mittleren Durchmesser unterhalb von 2 μm aufweisen, und daß damit die kritische Stromdichte mindestens um den Faktor fünf höher ist als ohne Ausscheidungen.

4. Nichtlineare Drossel nach einem der Ansprüche 1 bis 3,
**dadurch gekennzeichnet,**
daß die Dichte der Ausscheidungen unterhalb von 2 μm durch eine Abkühlbehandlung so groß gemacht wird, daß das Verhältnis der Sprungfeldstärke $H_s$ zur Feldstärke-Differenz $H_N$-$H_s$ größer als 4 ist: $H_s/(H_N-H_s) > 4$ ; wobei $H_N$ diejenige Feldstärke ist, bei der die Reaktanzerhöhung 75 % ihres Endwertes erreicht hat.

5. Nichtlineare Drossel nach einem der Ansprüche 1 bis 4,
**dadurch gekennzeichnet,**
daß durch die wahlweise Änderung der Anzahl und Größe der Ausscheidungspartikel das Einsetzen von Flußsprüngen bei einer dynamischen magnetischen Flußdichte im Bereich von 0,02 - 50 T vorgebbar ist.

6. Nichtlineare Drossel nach einem der Ansprüche 1 bis 5,
**dadurch gekennzeichnet,**
daß die dynamische magnetische Flußdichte, bei welcher ein Flußsprungauftritt, durch die Abkühlgeschwindigkeit während der Ausscheidung von $Y_2Ba_1Cu_1O_5$ und/oder $Y_2O_3$ einstellbar ist.

7. Nichtlineare Drossel nach einem der Ansprüche 1 bis 8,
**dadurch gekennzeichnet,**
daß die Oberfläche des Supraleiters glattgeschliffen und poliert ist.

8. Nichtlineare Drossel nach einem der Ansprüche 1 bis 7,
   **dadurch gekennzeichnet,**
   daß der Hochtemperatur-Supraleiter Bestandteil eines logischen Schaltelements ist.

9. Nichlineare Drossel nach einem der Ansprüche 1 bis 8,
   **dadurch gekennzeichnet,**
   daß der Supraleiter ein Vollzylinder ist.

10. Nichtlineare Drossel nach einem der Ansprüche 1 bis 8,
    **dadurch gekennzeichnet,**
    daß der Supraleiter ein Hohlzylinder ist.

11. Nichtlineare Drossel nach einem der Ansprüche 1 bis 8,
    **dadurch gekennzeichnet,**
    daß der Kern ein Torus ist.

12. Nichtlineare Drossel nach einem der Ansprüche 1 bis 8,
    **dadurch gekennzeichnet,**
    daß der Kern ein Hohltorus ist.

13. Nichtlineare Drossel nach Anspruch 8,
    **dadurch gekennzeichnet,**
    daß ein steuernder Leiter (5) und ein gesteuerter bistabiler Leiter (6) auf der hochtemperatursupraleitenden Keramik vorgesehen sind.

14. Nichtlineare Drossel nach einem der vorangehenden Ansprüche,
    **dadurch gekennzeichnet,**
    daß als Anteil bei der Herstellung Zirkon (Zr) oder Zirkonoxid zugegeben ist.

15. Nichtlineare Drossel nach Anspruch 14,
    **dadurch gekennzeichnet,**
    daß die hochtemperatursupraleitende Keramik einen Anteil auf YBaZrO-Basis enthält.

16. Verfahren zur Herstellung einer nichtlinearen Drossel mit einem Kern aus einer hochtemperatursupraleitenden Keramik nach einem der vorangehenden Ansprüche, wobei ein aus dieser Keramik hergestelltes Formteil in eine Schaltungsanordnung mit wenigstens einem bei Stromfluß ein Magnetfeld erzeugenden Leiter eingefügt wird,
    **dadurch gekennzeichnet,**
    daß zunächst $Y_{1+2x+y}Ba_{2+x}Cu_{3+x}O_z$ (mit $0 < x < 0,5$, $0 < y < 0,5$ und $6 < z < 7$) mit zusätzlich 0,5 bis 10 Gew.- % $Nb_2O_5$ -, Zr- oder $ZrO_2$ -Pulver zu einem pulverförmigen Ausgangsmaterial vermengt wird, daß anschließend aus diesem Ausgangsmaterial durch Kaltverpressen ein Formteil angefertigt wird, daß danach dieses Formteil ca. 5 bis 120 Minuten lang einer Temperatur zwischen ca. 1030 und 1200 °C ausgesetzt wird, daß es anschließend mit ca. 80 bis 120 K/h auf eine Temperatur zwischen 1010 und 1020 °C und anschließend mit ca. 0,5 bis 5 K/h unter 980 °C abgekühlt wird, daß es anschließend in sauerstoffhaltiger Umgebung bis zur vollständigen Sättigung mit Sauerstoff einer Temperatur von ca. 200 °C bis ca. 600 °C ausgesetzt wird, und daß es schließlich auf Raumtemperatur abgekühlt wird.

17. Verfahren nach Anspruch 16,
    **dadurch gekennzeichnet,**
    daß dem Kaltverpressen ein zusätzlicher Schmelzvorgang vorgeschaltet wird, der so abläuft, daß zunächst das pulverförmige Ausgangsmaterial rasch auf eine Temperatur von ca. 1200 bis 1400 °C gebracht und dort ca. 5 Minuten gehalten wird und daß es anschließend rasch abgekühlt und danach ungefähr bei Raumtemperatur pulverisiert wird.

18. Verfahren nach Anspruch 16,
    **dadurch gekennzeichnet,**
    daß das Ausgangsmaterial unvermischtes $Y_1Ba_2Cu_3O_x$-Pulver (mit $6 < x < 7$) ist und daß erst nach dem vorgeschalteten Schmelzvorgang das $Y_2Ba_1Cu_1O_5$ -, $Y_2O_3$ - und Nb- bzw. $Nb_2O_5$- oder das Zr- bzw. $ZrO_2$ - Pulver beigemischt wird.

19. Verfahren nach Anspruch 17 oder 18,
    **dadurch gekennzeichnet,**
    daß zusammen mit dem $Y_2Ba_1Cu_1O_5$-, $Y_2O_3$- $Nb_2O_5$- oder $ZrO_2$ -Pulver Silber oder $Ag_2O$ in feiner Verteilung zugesetzt wird.

**Claims**

1. Non-linear choke with a choke core of a high-temperature superconductor which is arranged in a magnetic field, which generates flux lines in the choke core, wherein in the superconductor, which consists of a metal oxide ceramic, the magnetic flux lines are urged below a threshold value of the magnetic field strength in the interior of the superconductor at the temperature of the liquid nitrogen, wherein the superconductor is normally conductive, characterised thereby that the critical current density $I_C$ is greater than $10^4$ A/cm$^2$, that the high-temperature superconductor consists of a multi-phase $Y_{1+2x+y}Ba_{2+x}Cu_{3+x}O_z$ ceramic, wherein x is greater than 0 and smaller than 0.5, y is greater than 0 and smaller than 0.5 and z is greater than 6 and smaller than 7, that $Y_2Ba_1Cu_1O_5$ and/or $Y_2O_3$ precipitation particles, which are produced by a melt texturing and have a mean diameter of less than 5 micrometres, are present in the ceramic and that the magnetic flux lines, which are anchored at finely divided adhesion locations in the form of precipitations in a melt-textured YBaCuO superconductor, are urged down from the threshold value $H_S$ for the magnetic field strength within an interval, which is small relative to the field strength $H_S$, with abrupt and significant change in the flux and thus also in the reactance within the superconductor, wherein the superconductor is normally-conductive locally.

2. Non-linear choke according to claim 1, characterised thereby that the number of precipitations is increased to such an extent that the critical current density is higher by at least the factor two than without precipitations.

3. Non-linear choke according to one of claims 1 to 2, characterised thereby that the precipitations have a mean diameter below 2 micrometres and that the critical current density is thus higher by at least the factor five than without precipitations.

4. Non-linear choke according to one of claims 1 to 3, characterised thereby that the desnity of the precipitations below 2 micrometres is made so large by a cooling treatment that the ratio of the step field strength $H_S$ to the field strength difference $H_N$-$H_S$ is greater than 4 ($H_S/(H_N$-$H_S)$ greater than 4), wherein $H_N$ is the field strength at which the increase in reactance has reached 75% of its final value.

5. Non-linear choke according to one of claims 1 to 4, characterised thereby that the insertion of flux steps at a dynamic magnetic flux density in the range of 0.02 to 50 T is presettable by the selectable change in the number and size of the precipitation particles.

6. Non-linear choke according to one of claims 1 to 5, characterised thereby that the dynamic magnetic flux density, at which a flux step occurs, is settable by the speed of cooling during the precipitation of $Y_2Ba_1Cu_1O_5$ and/or $Y_2O_3$.

7. Non-linear choke according to one of claims 1 to 6, characterised thereby that the surface of the superconductor is ground smooth and polished.

8. Non-linear choke according to one of claims 1 to 7, characterised thereby that the high-temperature superconductor is a component of a logical switching element.

9. Non-linear choke according to one of claims 1 to 8, characterised thereby that the superconductor is a solid cylinder.

10. Non-linear choke according to one of claims 1 to 8, characterised thereby that the superconductor is a hollow cylinder.

11. Non-linear choke according to one of claims 1 to 8, characterised thereby that the core is a torus.

12. Non-linear choke according to one of claims 1 to 8, characterised thereby that the core is a hollow torus.

13. Non-linear choke according to claim 8, characterised thereby that a controlling conductor (5) and a controlled bistable conductor (6) are provided on the high-temperature superconductive ceramic.

14. Non-linear choke according to one of the preceding claims, characterised thereby that zircon (Zr) or zircon oxide is added as a component during the manufacture.

15. Non-linear choke according to claim 14, characterised thereby that the high-temperature superconductive ceramic contains a component on a YBaZrO base.

16. Method of manufacturing a non-linear choke with a core of a high-temperature superconductive ceramic according to one of the preceding claims, wherein a moulded part made from this ceramic is inserted into a circuit arrangement with at least a conductor producing a magnetic field in the case of current flow, characterised thereby that initially $Y_{1+2x+y}Ba_{2+x}Cu_{3+x}O_z$ (wherein x is greater than 0 and smaller than 0.5, y is greater than 0 and smaller than 0.5 and z is greater than 6 and smaller than 7) is mixed with additional 0.5 to 10 weight percent of $Nb_2O_5$, Zr or $ZrO_2$ powder to form a pulverulent starting material, that subsequently a moulded part is produced from this starting material by cold pressing, that thereafter this moulded part is exposed to a temperature between about 1030 and 1200°C for about 5 to 120 minutes, that it is subsequently cooled at about 80 to 120 K/h to below 1010 and 1020°C and then at about 0.5 to 5 K/h to below 980°C, that it is subsequently exposed to a temperature 23 of about 200°C to about 500°C in an environment, which contains oxygen, until complete saturation with oxygen, and that it is finally cooled to room temperature.

17. Method according to claim 16, characterised thereby that an additional melt process is inserted before the cold pressing and so carried out that initially the pulverulent starting material is rapidly brought to a temperature of about 1200 to 1400°C and kept there for about 5 minutes and that it is subsequently rapidly cooled down and thereafter is pulverised approximately at room temperature.

**18.** Method according to claim 16, characterised thereby that the starting material is unmixed $Y_1Ba_2Cu_3O_x$ powder (in which x is greater than 6 and smaller than 7) and that the $Y_2Ba_1Cu_1O_5$, $Y_2O_3$ and Nb or $Nb_2O_5$ or the Zr or $ZrO_2$ powder is admixed only after the upstream melt process.

**19.** Method according to claim 17 or 18, characterised thereby that silver or $Ag_2O$ in fine division is admixed to the $Y_2Ba_1Cu_1O_5$, $Y_2O_3$, $Nb_2O_5$ or $ZrO_2$ powder.

**Revendications**

**1.** Bobine d'inductance non linéaire comportant un noyau de bobine en supraconducteur à haute température, disposé dans un champ magnétique qui provoque dans le noyau de la bobine des lignes de flux, dans le cas de laquelle, dans le supraconducteur, constitué d'une céramique à base d'oxyde métallique, à la température de l'azote liquide, les lignes du flux magnétique, en dessous d'une valeur de seuil de l'intensité de champ magnétique, sont refoulées à l'intérieur du supraconducteur, le supraconducteur devenant normalement conducteur,
caractérisée par le fait
que la densité de courant critique Ic est supérieure à $10^4$ A/cm², que le supraconducteur à haute température est constitué d'une céramique de $Y_{1+2.x+y} Ba_{2+x} Cu_{3+x} O_z$, avec O<x<0,5; 0<y<0,5 et 6<z<7, et que dans la céramique il y a des particules de $Y_2Ba_1Cu_1O_5$ et/ou de $Y_2O_3$ qui proviennent d'une précipitation produite par une texture résultant d'une fusion et qui présentent un diamètre moyen inférieur à 5 μm, et que les lignes de flux magnétique, qui, dans un supraconducteur YBaCuO à texture résultant d'une fusion, se fixent en des positions d'adhérence finement réparties, sous forme de précipitations, sont, à partir de la valeur de seuil Hs pour l'intensité de champ magnétique, en un intervalle bref par rapport à la durée de l'intensité de champ Hs, par suite d'une modification abrupte et significative du flux et donc également de la réactance, refoulées à l'intérieur du supraconducteur, le supraconducteur devenant alors localement normalement conducteur.

**2.** Bobine d'inductance non linéaire selon la revendication 1,
caractérisée
par le fait que l'inductance croît tellement par suite du nombre de précipitations que la densité de courant critique est plus élevée, d'au moins le facteur deux, qu'en l'absence de précipitations.

**3.** Bobine d'inductance non linéaire selon la revendication 2,

caractérisée
par le fait que les précipitations présentent un diamètre moyen inférieur à 2 μm et que de ce fait la densité de courant critique est plus élevée, d'au moins le facteur cinq, qu'en l'absence de précipitations.

**4.** Bobine d'inductance non linéaire selon l'une des revendications 1 à 3,
caractérisée
par le fait que la densité des précipitations de diamètre inférieur à 2 μm est rendue, par un traitement de refroidissement, suffisamment grande pour que le rapport entre l'intensité de champ de saut $H_S$ et la différence des intensité de champ $H_N$-$H_S$ soit supérieure à 4: $H_S/(H_N-H_S) > 4$; $H_N$ étant l'intensité de champ pour laquelle l'augmentation de la réactance a atteint 75% de sa valeur finale.

**5.** Bobine d'inductance non linéaire selon l'une des revendications 1 à 4,
caractérisée
par le fait qu'en modifiant à volonté le nombre et la dimension des particules provenant de la précipitation on peut prescrire le déclenchement des sauts de flux pour une densité de flux magnétique dynamique située sur la plage allant de 0,02 à 50 T.

**6.** Bobine d'inductance non linéaire selon l'une des revendications 1 à 5,
caractérisée
par le fait que, par la vitesse de refroidissement pendant la précipitation de $Y_2 Ba_1 Cu_1 O_5$ et/ou $Y_2 O_3$, on peut régler la densité de flux magnétique dynamique pour laquelle se produit un saut de flux.

**7.** Bobine d'inductance non linéaire selon l'une des revendications 1 à 8,
caractérisée
par le fait que la surface du supraconducteur est lissée à la meule et polie.

**8.** Bobine d'inductance non linéaire selon l'une des revendications 1 à 7,
caractérisée
par le fait que le conducteur à haute température est un composant d'un élément de commutation logique.

**9.** Bobine d'inductance non linéaire selon l'une des revendications 1 à 8,
caractérisée
par le fait que le supraconducteur est un cylindre plein.

**10.** Bobine d'inductance non linéaire selon l'une des revendications 1 à 8,

caractérisée

par le fait que le supraconducteur est un cylindre creux.

11. Bobine d'inductance non linéaire selon l'une des revendications 1 à 8,

caractérisée

par le fait que le noyau est un tore.

12. Bobine d'inductance non linéaire selon l'une des revendications 1 à 8,

caractérisée

par le fait que le noyau est un tore creux.

13. Bobine d'inductance non linéaire selon l'une des revendications 1 à 8,

caractérisée

par le fait qu'un conducteur pilote (5) et un conducteur bistable piloté (6) sont prévus sur la céramique supraconductrice à haute température.

14. Bobine d'inductance non linéaire selon l'une des revendications précédentes,

caractérisée

par le fait que comme ingrédient lors de la fabrication, on ajoute du zirconium ou de l'oxyde de zirconium.

15. Bobine d'inductance non linéaire selon la revendication 14,

caractérisée

par le fait que la céramique supraconductrice à haute température contient un ingrédient à base de YBaZrO.

16. Procédé de fabrication d'une bobine d'inductance non linéaire comportant un noyau de céramique supraconductrice à haute température selon l'une des revendications précédentes, dans lequel on insère une pièce de forme, fabriquée à partir de cette céramique, dans un circuit comportant au moins un conducteur produisant un champ magnétique en cas de passage du courant,

caractérisé par le fait

que l'on mélange tout d'abord du $Y_{1+2x+y}$ $Ba_{2+x}$ $Cu_{3+x}$ $O_z$ (avec $O < x < 0,5$; $0 < y < 0,5$ et $6 < z < 7$) avec 0,5 à 10% en poids de poudre de Nb, $Nb_2$ $O_5$, Zr ou $ZrO_2$, pour obtenir un matériau initial pulvérulent, qu'ensuite, à partir de ce matériau initial, on fabrique par pressage à froid une pièce de forme, qu'ensuite on expose cette pièce de forme pendant environ 5 à 120 minutes à une température comprise entre 1030 et 1200°C, qu'on la fait ensuite refroidir à une vitesse d'environ 80 à 120 K/h jusqu'à une température comprise entre 1010 et 1020°C et ensuite à une vitesse d'environ 0,5 à 5 K/h, en dessous de 980°C, qu'on l'expose ensuite dans une ambiance à teneur d'oxygène, jusqu'à saturation complète en oxygène, à une température d'environ 200°C à environ 600°C et qu'on la refroidit finalement à la température ambiante.

17. Procédé selon la revendication 16,

caractérisé

par le fait que préalablement au pressage à froid on procède à un processus de fusion supplémentaire qui se déroule de façon telle que tout d'abord on amène brusquement le matériau initial pulvérulent à une température d'environ 1200 à 1400°C et qu'on l'y maintient environ 5 minutes et qu'ensuite on le refroidit brusquement et qu'ensuite on le pulvérise environ à la température ambiante.

18. Procédé selon la revendication 16,

caractérisé

par le fait que le matériau initial est de la poudre de $Y_1 Ba_2$ $Cu_3$ $O_x$ non mélangée (avec $6 < x < 7$) et que ce n'est qu'après le processus de fusion auquel on a préalablement procédé que l'on ajoute et mélange la poudre de $Y_2 Ba$ $Cu_1$ $O_5$, $Y_2$ $O_3$ et $Nb_2$ ou $Nb_2$ $O_5$ ou la poudre de Zr ou $ZrO_2$.

19. Procédé selon la revendication 17 ou 18,

caractérisé par le fait qu'en même temps que la poudre de $Y_2$ $Ba_1$ $Cu_1$ $O_5$, $Y_2$ $O_3$, $Nb_2$ $O_5$ ou $ZrO_2$ on ajoute de l'argent ou de l'oxyde $Ag_2O$ finement divisé.

FIG. 1

11

12

20 – 100 μm

C

b

a

FIG. 2

FIG. 3

FIG.4

FIG.5

FIG.6

FIG. 7

IMPEDANZÄNDERUNG (NORMIERT)

600 Hz ; VOLLZYLINDER

EP 0 583 749 B1

FIG.8

FIG.9

$I_S$

27

FIG.10

HTSL

28

29

$I_S$

FIG.11

29

27

28

FIG. 12